# EUROPÄISCHE PATENTSCHRIFT

(11) **EP 1 188 649 B1**
(45) Veröffentlichungstag und Bekanntmachung des Hinweises auf die Patenterteilung: **27.10.2004**
(21) Anmeldenummer: 01121969.8
(22) Anmeldetag: 13.09.2001
(51) Int. Cl.: B62D 53/08

(54) **Vorrichtung zur Lagerung einer Sattelkupplung**
Bearing support for a fifth-wheel coupling
Logement des paliers pour une sellette d'attelage

(30) Priorität: 15.09.2000 DE 10046088
(43) Veröffentlichungstag der Anmeldung: 20.03.2002
(73) Patentinhaber: Jost-Werke GmbH & Co. KG, 60528 Frankfurt am Main (DE)
(72) Erfinder: Strütt, Achim, 64560 Riedstadt (DE); Yurtsever, Ender, 64390 Erzhausen (DE); Maiwald, Andreas, 61194 Niddatal (DE)
(74) Vertreter: Fuchs Mehler Weiss & Fritzsche

(56) Entgegenhaltungen:
- EP-A- 0 051 113
- DE-A- 19 952 997
- GB-A- 1 430 011
- US-A- 5 435 194
- PATENT ABSTRACTS OF JAPAN vol. 1999, no. 12, 29. Oktober 1999 (1999-10-29) & JP 11 198870 A (HINO MOTORS LTD), 27. Juli 1999 (1999-07-27)

## Beschreibung

Die Erfindung betrifft eine Vorrichtung zur Lagerung einer Sattelkupplung gemäß dem Oberbegriff des Anspruchs 1.

Die Lagerung einer Sattelkupplung stellt die Verbindung zwischen Kupplungsplatte und Unterbauten wie Lagerböcken, Montageplatten, Hub- oder Verschiebeeinrichtungen dar. Hierbei handelt es sich um Komponenten, die die Sattelkupplung tragen und selbst wiederum fest mit dem Fahrzeugrahmen verbunden werden. Die Verbindung muß alle während des Betriebes auftretenden Kräfte übertragen. Darüber hinaus muß als Ausgleich bei der Fahrt über unebenen Grund eine Schwenkbewegung der Sattelkupplung um die Fahrzeugquerachse von mindestens 12° möglich sein. Im Hinblick auf Aufsattelvorgänge von leichten und leeren Aufliegern ist es notwendig, die Schwenkbewegung sehr leicht einleiten zu können. Schwergängigkeit der Lagerung kann beim Aufsatteln dazu führen, daß das Gewicht des Aufliegers nicht ausreicht, eine schrägstehende Kupplung parallel zur Aufliegerunterseite zu stellen. Damit ist die Position des Königszapfens zum Verschlußmechanismus in der Sattelkupplung nicht korrekt und die Schließfunktion der Sattelkupplung ist gestört. Im Regelfall wird eine leichtgängige Lagerung durch eine Bolzenverbindung realisiert.

Eine derartige Lagerung einer Sattelkupplung ist aus der deutschen Patentanmeldung mit dem Aktenzeichen 199 52 997.3-21 (Offenlegungstag 17.05.2001) bekannt, die eine Befestigungsvorrichtung mit einem Lagerbock und einem mit dem Lagerbock zusammenwirkenden Lagerelement, das an einer Kupplungsplatte der Sattelkupplung befestigbar ist, offenbart. Das zwischen dem Lagerbock und dem Lagerelement angeordnete Gummikissen ist jedoch aus einem Vollmaterial gefertigt und ermöglicht Schwenkbewegungen der Kupplungsplatte nur mit großem Kraftaufwand.

Aus der DE 44 02 526 A1 ist eine Vorrichtung zur Lagerung einer Sattelkupplung bekannt, bei der die Verbindung zwischen Kupplungsplatte und Lagerbock mittels eines Bolzens hergestellt wird, über den eine elastische Hülse, eine sogenannte Gummibuchse gezogen wird. Dieser Verbindungstyp bedingt eine aufwendige mechanische Bearbeitung von Kupplungsplatte, Bolzen und Lagerbock. Aufgrund des Vollmaterials und der großen Reibungsflächen schwenkt die Kupplungsplatte nur schwergängig.

Die DE 30 40 925 C2 beschreibt eine Sattelkupplung, bei der zur Vermeidung der mechanischen Bearbeitung die Gelenkfunktion mit Gummielementen hergestellt wird. Dabei wird die Elastizität des Gummis ausgenutzt, um eine gewisse Beweglichkeit zwischen Lagerbock und Kupplungsplatte zu gewährleisten. Eine Schwenkbewegung der Kupplungsplatte wird durch Verdrängung des Gummis ermöglicht. Dieser Lagerungstyp einer Verdrängungskupplung ist sehr kostengünstig herzustellen, schwenkt aufgrund des hohen Kraftaufwandes beim Verdrängen des Gummis aber schwergängig.

Einen gattungsbildenden Stand der Technik offenbart die DE 23 03 163 B. Die darin beschriebene Lagerung für eine Sattelkupplung umfaßt eine sich auf einem Lagerbock abstützende Sattelkupplungsplatte, die an der Unterseite der Sattelkupplungsplatte mittels eines durch den Lagerbock durchgreifenden Riegels befestigt ist. An dem Riegel ist lagerbockseitig eine Halterung zur Befestigung einer massiven Gummileiste ausgebildet, mit der eine Dämpfung der auftretenden Stöße und Belastungen erfolgen soll. Die massiv ausgebildete Gummileiste lässt ein Schwenken der Sattelkupplung, wie die zuvor beschriebene Verdrängungskupplung, nur mit hohem Kraftaufwand zu.

Ein anderes in der DE 23 03 163 B beschriebenes Dämpfungselement besteht aus einem Gummirohr, das allerdings im montierten Zustand von einem Bolzen ausgefüllt wird und folglich nicht oder nur sehr wenig zur Erleichterung einer walkenden Bewegung beitragen kann.

Die JP 11198870 A beschreibt eine ähnliche Lagerung einer Sattelkupplung mittels eines Dämpfungselementes in Form einer Gummibuchse, durch die eine mit der Sattelkupplungsplatte verbundene Stützwelle gesteckt ist. Das Dämpfungselement ist elastisch und verfügt über Hohlräume, es kann jedoch keine Abrollbewegung ausführen.

Es ist daher Aufgabe der vorliegenden Erfindung, eine Vorrichtung zur leichtgängigen Lagerung einer Sattelkupplung ohne aufwendige Nachbearbeitung der Bauteile zu schaffen.

Diese Aufgabe wird erfindungsgemäß dadurch gelöst, dass das Walkelement im Einbauzustand mindestens einen Hohlraum aufweist. Unter einem Walkelement wird vorzugsweise ein elastisches Element verstanden, das im deformierten, insbesondere komprimierten Zustand noch eine Abrollbewegung durchführt.

Der Einbau eines Walkelementes sorgt somit für ein leichtgängiges Schwenken der Sattelkupplung. Bevorzugte Materialien sind beispielsweise Gummi, Polyurethan oder Federstahl. Diese haben den Vorteil, dass der Einbauraum mit hohen Fertigungstoleranzen hergestellt werden kann. Auf eine mechanische Nachbearbeitung der kontaktierenden Flächen im Bereich der Brücke und des bügelförmigen Lagerbocks kann verzichtet werden, da ein Toleranzausgleich durch die Elastizität des Walkelementes gegeben ist. Eine bevorzugte Ausführungsform des Walkelementes zeichnet sich dadurch aus, dass das Walkelement röhrenförmig ausgebildet ist und mindestens einen Hohlraum parallel zur Sattelkupplungsquerachse besitzt. Aufgrund der röhrenförmigen Ausbildung der Kontaktflächen des Walkelementes wird eine verbesserte rollende, d.h. walkende Bewegung des Walkelementes möglich.

Diese Bewegung kann mit vergleichsweise wenig Kraftaufwand durchgeführt werden.

Ein weiterer Vorteil der Röhrenform des Walkelementes besteht darin, daß Durchmesseränderungen des Walkelementes aufgrund von Fertigungstoleranzen leichter tolerierbar sind als bei einem Vollmaterial. Günstig ist eine Ausführungsform, bei der der mindestens eine Hohlraum des Walkelementes so groß ist, daß die Innenflächen des Walkelementes auch im eingebauten Zustand nicht aneinanderreiben. Ein Aneinanderreiben der Innenwände des Walkelementes vermindert die Walkbewegung und würde u.U. den Verschleiß des Walkelementes erhöhen.

Vorteilhafterweise sind an dem Walkelement und dem bügelförmigen Lagerbock oder der Brücke Mittel zum formschlüssigen Fixieren des Walkelementes ausgeformt. In einer bevorzugten Ausführungsform ist auf der Außenoberfläche des Walkelementes mindestens ein Noppen ausgebildet, der in eine Vertiefung in dem bügelförmigen Lagerbock oder der Brücke eingreift. Der Noppen kann beispielsweise auf der dem bügelförmigen Lagerbock zugewandten Seite des Walkelementes ausgeformt sein und in den bügelförmigen Lagerbock eingreifen. Denkbar ist aber auch eine Ausführungsform mit einer Vertiefung im Walkelement und einem Noppen an dem bügelförmigen Lagerbock oder der Brücke. Die formschlüssige Verbindung des Walkelementes mit dem bügelförmigen Lagerbock oder der Brücke dient als Montagehilfe bei dem Zusammenbau der Sattelkupplung und sorgt für eine bestimmungsgemäße Position des Walkelementes zwischen dem bügelförmigen Lagerbock und der Brücke.

Eine bevorzugte Ausführungsform der Vorrichtung zur Lagerung einer Sattelkupplung zeichnet sich dadurch aus, daß das Walkelement an der Brücke oder dem bügelförmigen Lagerbock befestigt ist. Die Befestigung kann als zeitlich begrenzte Klebeverbindung für den Zeitraum der Montage ausgeführt werden. Der Vorteil der Klebeverbindung liegt in der einfachen Montage, da das Gummikissen mit der Brücke zusammen montiert werden kann und sich nicht verschiebt oder herunterfällt.

Eine vorteilhafte Ausführungsform weist eine U-förmige Brücke auf. Aufgrund der U-Form der Brücke wird der Einbauraum des Walkelementes in Zusammenwirken mit dem bügelförmigen Lagerbock vorgegeben und das Walkelement vorgespannt.

Günstig ist eine Ausführungsform, bei der im Kontaktbereich des Walkelementes mit der Brücke und dem bügelförmigen Lagerbock die Krümmung des Brückenquerschnitts derart auf den bügelförmigen Lagerbock abgestimmt ist, daß ein keilförmiger Einbauraum ausgebildet ist, wodurch bei zunehmendem Schwenkwinkel um die Fahrzeugquerachse das Walkelement im Randbereich durch den sich ausbildenden keilförmigen Einbauraum stärker komprimiert und in seiner Walkbewegung begrenzt wird. Bei günstiger Materialauswahl und Gestaltung des Walkelementes entsteht durch den keilförmigen Einbauraum ein Rückstellmoment in Richtung der Ausgangsposition, so daß sich die Sattelkupplung parallel zur Unterseite des Aufliegers zurückstellt. Dieses ist vorteilhaft bei der Ankopplung eines leichten oder leeren Aufliegers.

Vorteilhafterweise besteht die Brücke aus zwei Schenkeln und einem Verbindungssteg, wobei der Verbindungssteg in mindestens einem Bereich zwischen dem Walkelement und dem Schenkel einen stufenförmigen Vorsprung aufweist. Bei Zugbelastung der Sattelkupplung, wie sie z.B. bei Kurvenfahrten vorkommt, wirkt der stufenförmige Vorsprung als Endanschlag und schützt das Walkelement vor Beschädigungen.

Eine bevorzugte Ausführungsform zeichnet sich durch mindestens zwei vorstehende Halteelemente in Umfangsrichtung an der inneren Mantelfläche des bügelförmigen Lagerbocks aus. Mit Hilfe dieser Halteelemente wird die Bewegung des Walkelementes um die Fahrzeugquerachse begrenzt und die Position des Walkelementes im Lagerbock fixiert.

Im folgenden wird ein in den Zeichnungen dargestelltes Ausführungsbeispiel der Erfindung erläutert.

Es zeigen:
- Fig. 1: einen Querschnitt eines Ausführungsbeispieles der erfindungsgemäßen Lagerung der Sattelkupplung,
- Fig. 2: einen Längsschnitt längs der Achse A-A, und
- Fig. 3: eine Seitenansicht gemäß Fig. 1 mit geschwenkter Lagerung.

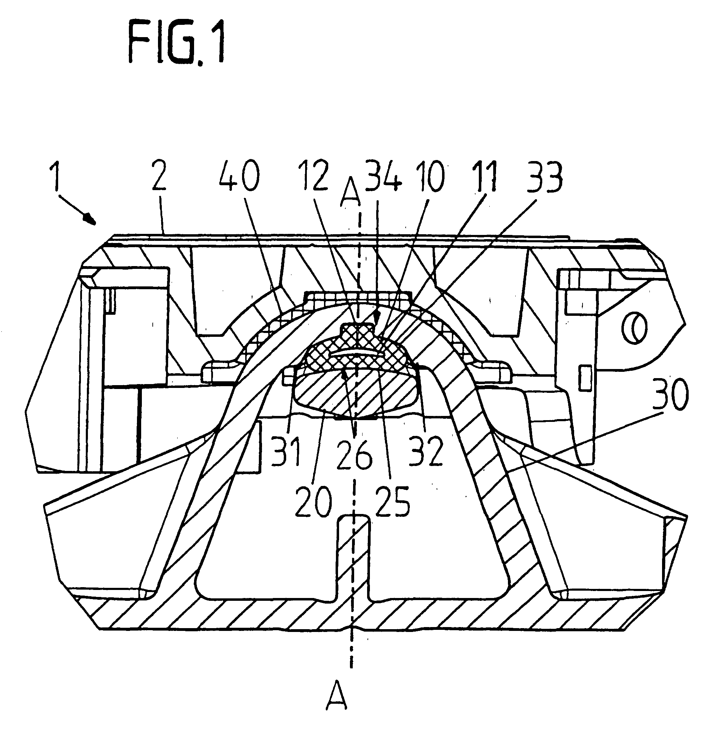

Die in den Fign. 1 bis 3 dargestellte Sattelkupplung 1 ist, was ihre eigentliche Kupplungsmechanik betrifft, in der üblichen Weise gestaltet. An der Unterseite einer Kupplungsplatte 2 ist eine Brücke 20 mittel zweier Schrauben 3,4 befestigbar.

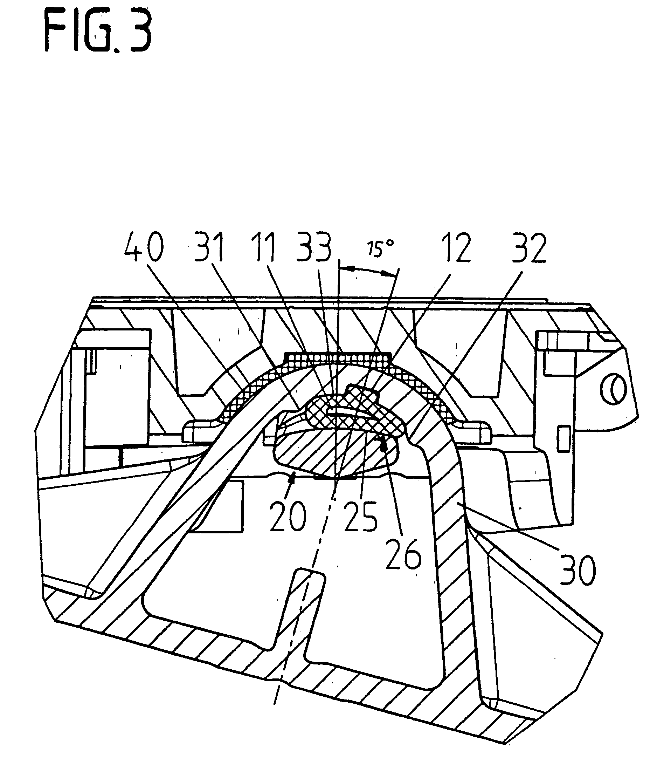

Der Lagerbock 30 ist bügelförmig ausgebildet, wie in Fig. 1 und 3 erkennbar ist. Er stützt sich gegenüber der Kupplungsplatte 2 über eine Kunststofflagerschale 40 ab. Die Kunststofflagerschale 40 hat die Aufgabe, Verschleiß an der Unterseite der Kupplungsplatte 2 und an der Oberseite des bügelförmigen Lagerbocks 30 zu vermeiden.

In Fig. 1 und 3 sind im oberen Bereich des bügelförmigen Lagerbocks 30 auf der inneren Mantelfläche die beiden Halteelemente 31 ,32 als vorstehende Rippen zu erkennen. Begrenzt durch die beiden Halteelemente 31, 32, den bügelförmigen Lagerbock 30 und die Brücke 20 ist das Walkelement 10 angeordnet.

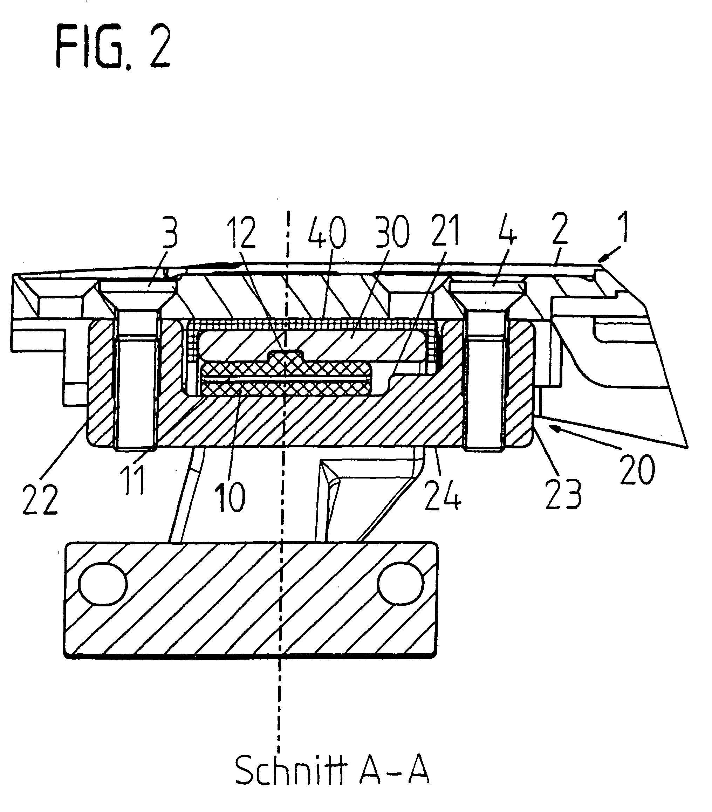

Entsprechend der Fig. 2 ist die Brücke 20 im wesentlichen U-förmig ausgebildet und besteht aus einem horizontalen Verbindungssteg 24 und den an den Enden befindlichen Schenkeln 22,23, in denen die Schrauben 3,4 zur Anbringung der Brücke 20 unter der Kupplungsplatte 2 befestigt sind. Zwischen dem Walkelement 10 und dem Schenkel 23 weist der Verbindungssteg 24 einen stufenförmigen Vorsprung 21 auf. Dieser stufenförmige Vorsprung 21 verhindert bei Zugbelastung der Sattelkupplung Beschädigungen des Walkelementes 10, da sich der stufenförmige Vorsprung 21 an der Innenseite des bügelförmigen Lagerbocks 30 abstützt und dadurch ein geschützter Restraum zwischen Brücke 20 und Lagerbock 30 verbleibt. Der Verbindungssteg 24 der Brücke 20 ist bei normaler Belastung rundherum beabstandet zum Lagerbock 30 angeordnet.

Das schlauch- und röhrenförmige Walkelement 10 erstreckt sich in Richtung der Fahrzeugquerachse und wird in der Einbaulage zusammengedrückt, wobei auch im Einbauzustand ein Hohlraum 11, der in den Fign. 1 bis 3 zu erkennen ist, vorhanden ist. Die Fig. 2 zeigt darüber hinaus den Noppen 12, der in einer entsprechenden Vertiefung im Lagerbock 30 zur Fixierung des Walkelementes 10 eingreift.

Die Fig. 3 verdeutlicht die Wirkungsweise des Walkelementes 10 bei einer Abwinklung der Sattelzugmaschine von 15° zum Auflieger. Gegenüber dem Einbauzustand hat sich die vormals symmetrische Querschnittsform des Walkelementes 10 verändert. Der Krümmungsradius des Brückenquerschnitts 26 ist größer ausgeführt als der Krümmungsradius des bügelförmigen Lagerbocks 34. In dem komprimierten Bereich des Walkelementes 10 verlaufen die mit dem Walkelement kontaktierende innere Mantelfläche des Lagerbocks 30 rechts der Mittelachse A-A und die mit dem Walkelement 10 kontaktierende Oberfläche des Verbindungsstegs 24 mit zunehmender Abwinklung in einem wachsenden Winkel zueinander. Eine Fixierung des Walkelementes 10 bei maximaler Abwinklung wird durch das Halteelement 32 unterstützt. Die Halteelemente 31, 32 liegen an dem Walkelement 10 nur im eingebauten Zustand an. In der Fig. 3 wird weiterhin deutlich, daß das Walkelement 10 seine Einbauposition relativ zum bügelförmigen Lagerbock 30 kaum verändert, wohl aber zur Brücke 20. Dieses wird durch eine größere Breite der kontaktierenden Oberfläche 25 des Verbindungsstegs 24 gegenüber der Breite des Walkelements möglich, so daß das Walkelement 10 auf dem Verbindungssteg 24 der Brücke 20 abrollen kann.

### Bezugszeichen

- 1: Sattelkupplung
- 2: Kupplungsplatte
- 3: Schrauben
- 4: Schrauben
- 10: Walkelement
- 11: Hohlraum des Walkelementes
- 12: Noppen
- 20: Brücke
- 21: stufenförmiger Vorsprung
- 22: Schenkel
- 23: Schenkel
- 24: Verbindungssteg
- 25: kontaktierende Oberfläche des Verbindungsstegs
- 26: Krümmungsradius des Brückenquerschnitts
- 30: bügelförmiger Lagerbock
- 31: Halteelement
- 32: Halteelement
- 33: innere Mantelfläche Lagerbock
- 34: Krümmungsradius des bügelförmigen Lagerbocks
- 40: Kunststofflagerschale

## Patentansprüche

1. Vorrichtung zur Lagerung einer Sattelkupplung (1) mit einem bügelförmigen Lagerbock (30) und einer Brücke (20) parallel zur Schwenkachse der Sattelkupplung (1), die an einer sich auf dem Lagerbock (30) abstützenden Kupplungsplatte (2) der Sattelkupplung (1) befestigt ist, wobei zwischen dem Lagerbock , (30) und der Brücke (20) ein Dämpfungselement als Walkelement (10) angeordnet ist, **dadurch gekennzeichnet, daß** das Walkelement (10) im Einbauzustand mindestens einen Hohlraum (11) aufweist.

2. Vorrichtung nach Anspruch 1, **dadurch gekennzeichnet, daß** das Walkelement (10) aus Gummi besteht.

3. Vorrichtung nach Anspruch 1, **dadurch gekennzeichnet, daß** das Walkelement (10) aus Polyurethan besteht.

4. Vorrichtung nach Anspruch 1, **dadurch gekennzeichnet, daß** das Walkelement (10) aus einem Federstahl besteht.

5. Vorrichtung nach einem der Ansprüche 1 bis 4, **dadurch gekennzeichnet, daß** das Walkelement (10) röhrenförmig ausgebildet ist.

6. Vorrichtung nach einem der Ansprüche 1 bis 5, **dadurch gekennzeichnet, daß** der Hohlraum (11) des Walkelementes (10) so groß ist, daß die Innenflächen des Walkelementes (10) im eingebauten Zustand nicht aneinanderreiben.

7. Vorrichtung nach einem der Ansprüche 1 bis 6, **dadurch gekennzeichnet, daß** an dem Walkelement (10) und dem bügelförmigen Lagerbock (30) oder der Brücke (20) Mittel zum formschlüssigen Fixieren des Walkelementes (10) ausgeformt sind.

8. Vorrichtung nach einem der Ansprüche 1 bis 7, **dadurch gekennzeichnet, daß** auf einer Außenoberfläche des Walkelementes (10) mindestens ein Noppen (12) ausgebildet ist, der in eine Vertiefung in dem bügelförmigen Lagerbock (30) oder der Brücke (20) eingreift.

9. Vorrichtung nach einem der Ansprüche 1 bis 8, **dadurch gekennzeichnet, daß** das Walkelement (10) an der Brücke (20) oder an dem bügelförmigen Lagerbock (30) befestigt ist.

10. Vorrichtung nach einem der Ansprüche 1 bis 9, **dadurch gekennzeichnet, daß** das Walkelement (10) an die Brücke (20) oder an den bügelförmigen Lagerbock (30) geklebt ist.

11. Vorrichtung nach einem der Ansprüche 1 bis 10, **dadurch gekennzeichnet, daß** im Kontaktbereich des Walkelementes (10) mit der Brücke (20) und dem bügelförmigen Lagerbock (30) die Krümmung des Brückenquerschnitts (26) derart auf den bügelförmigen Lagerbock (34) abgestimmt ist, daß ein keilförmiger Einbauraum ausgebildet ist.

12. Vorrichtung nach einem der Ansprüche 1 bis 11, **dadurch gekennzeichnet, daß** die Brücke (20) aus zwei Schenkeln (22,23) und einem Verbindungssteg (24) besteht, wobei der Verbindungssteg (24) in mindestens einem Bereich zwischen dem Walkelement (10) und einem Schenkel (22,23) einen stufenförmigen Vorsprung (21) aufweist.

13. Vorrichtung nach einem der Ansprüche 1 bis 12, **dadurch gekennzeichnet, daß** der bügelförmige Lagerbock (30) an seiner inneren Mantelfläche (33) in Umfangsrichtung des Walkelementes (10) mindestens zwei vorstehende Halteelemente (31,32) aufweist.

## Claims

1. Device for the mounting of a fifth-wheel coupling (1) with a bow-form bearing support (30) and a bridge (20) parallel to the swing axis of the fifth-wheel coupling (1), which is attached to a coupling plate (2) of the fifth-wheel coupling (1) supported on the bearing support (30), wherein a damping element is provided as a flexing element (10) between the bearing support (30) and the bridge (20), **characterised in that** the flexing element (10) in the installation state has at least one cavity (11).

2. Device according to claim 1, **characterised in that** the flexing element (10) is made from rubber.

3. Device according to claim 1, **characterised in that** the flexing element (10) is made from polyurethane.

4. Device according to claim 1, **characterised in that** the flexing element (10) is made from a spring steel.

5. Device according to one of claims 1 to 4, **characterised in that** the flexing element (10) is tubular in form.

6. Device according to one of claims 1 to 5, **characterised in that** the cavity (11) of the flexing element (10) is so large that the inner faces of the flexing element (10) do not rub against each other in the installed state.

7. Device according to one of claims 1 to 6, **characterised in that** on the flexing element (10) and the bow-form bearing support (30) or the bridge (20) are formed means for the positive location of the flexing element (10).

8. Device according to one of claims 1 to 7, **characterised in that** on an external surface of the flexing element (10) is formed at least one knob (12) which engages in a hollow in the bow-form bearing support (30) or the bridge (20).

9. Device according to one of claims 1 to 8, **characterised in that** the flexing element (10) is attached to the bridge (20) or to the bow-form bearing support (30).

10. Device according to one of claims 1 to 9, **characterised in that** the flexing element (10) is adhered to the bridge (20) or to the bow-form bearing support (30).

11. Device according to one of claims 1 to 10, **characterised in that** in the contact region of the flexing element (10) with the bridge (20) and the bow-form bearing support (30) the curvature of the bridge cross-section (26) is suited to the bow-form bearing support (34) in such a manner that a wedge-shaped installation space is formed.

12. Device according to one of claims 1 to 11, **characterised in that** the bridge (20) consists of two limbs (22, 23) and a connecting bar (24), with the connecting bar (24) having a step-form projection (21) in at least one region between the flexing element (10) and a limb (22, 23).

13. Device according to one of claims 1 to 12, **characterised in that** the bow-form bearing support (30) has at least two projecting retaining elements (31, 32) on its inner surface (33) in the circumferential direction of the flexing element (10).

## Revendications

1. Dispositif pour le logement d'une sellette d'attelage (1) comprenant un sabot d'appui (30) en forme d'étrier et un pont (20) parallèle à l'axe de pivotement de la sellette d'attelage (1), qui est fixé sur une plaque d'accouplement (2) de la sellette d'attelage (1) s'appuyant sur le sabot d'appui (30), un élément d'amortissement comme élément de foulage (10) étant disposé entre le sabot d'appui (30) et le pont (20), **caractérisé en ce que** l'élément de foulage (10) comprend à l'état encastré au moins un espace creux (11).

2. Dispositif selon la revendication 1, **caractérisé en ce que** l'élément de foulage (10) est constitué de caoutchouc.

3. Dispositif selon la revendication 1, **caractérisé en ce que** l'élément de foulage (10) est constitué de polyuréthane.

4. Dispositif selon la revendication 1, **caractérisé en ce que** l'élément de foulage (10) est constitué d'acier à ressorts.

5. Dispositif selon l'une des revendications 1 à 4, **caractérisé en ce que** l'élément de foulage (10) est conçu en forme de tuyau.

6. Dispositif selon l'une des revendications 1 à 5, **caractérisé en ce que** l'espace creux (11) de l'élément de foulage (10) est si grand que les surfaces intérieures de l'élément de foulage (10) à l'état encastré ne frottent pas les unes contre les autres.

7. Dispositif selon l'une des revendications 1 à 6, **caractérisé en ce que** des moyens destinés à fixer par engagement positif l'élément de foulage (10) sont formés sur l'élément de foulage (10) et le sabot d'appui en forme d'étrier (30) ou le pont (20).

8. Dispositif selon l'une des revendications 1 à 7, **caractérisé en ce qu'**au moins un picot (12) est formé sur une surface extérieure de l'élément de foulage (10), lequel picot se met en prise dans un renfoncement dans le sabot d'appui en forme d'étrier (30) ou le pont (20).

9. Dispositif selon l'une des revendications 1 à 8, **caractérisé en ce que** l'élément de foulage (10) est fixé sur le pont (20) ou sur le sabot d'appui en forme d'étrier (30).

10. Dispositif selon l'une des revendications 1 à 9, **caractérisé en ce que** l'élément de foulage (10) est collé sur le pont (20) ou le sabot d'appui en forme d'étrier (30).

11. Dispositif selon l'une des revendications 1 à 10, **caractérisé en ce que**, dans la zone de contact entre l'élément de foulage (10) et le pont (20) et le sabot d'appui en forme d'étrier (30), la courbure de la section (26) du pont est adaptée au sabot d'appui en forme d'étrier (34), de telle sorte qu'un espace d'encastrement cunéiforme soit formé.

12. Dispositif selon l'une des revendications 1 à 11, **caractérisé en ce que** le pont (20) est constitué de deux branches (22, 23) et d'une passerelle de raccordement (24), la passerelle de raccordement (24) comprenant, dans au moins une zone entre l'élément de foulage (10) et une branche (22, 23), une saillie en échelon (21).

13. Dispositif selon l'une des revendications 1 à 12, **caractérisé en ce que** le sabot d'appui en forme d'étrier (30) comprend sur sa surface de revêtement intérieure (33), dans la direction périphérique de l'élément de foulage (10), au moins deux éléments de retenue (31, 32) en saillie.
